# EUROPEAN PATENT SPECIFICATION

(11) **EP 4 530 838 B1**
(45) Date of publication and mention of the grant of the patent: **04.11.2026**
(21) Application number: 23915798.5
(22) Date of filing: 21.12.2023
(51) Int. Cl.: G06F 9/445, G06F 9/4401, G06F 21/57, G06F 21/78

(54) **SERVER STARTUP MANAGEMENT SYSTEM AND METHOD**
SERVERSTARTVERWALTUNGSSYSTEM UND -VERFAHREN
SYSTÈME ET PROCÉDÉ DE GESTION DE DÉMARRAGE DE SERVEUR

(30) Priority: 09.01.2023 CN 202310023973
(43) Date of publication of application: 02.04.2025
(73) Proprietor: Suzhou Metabrain Intelligent Technology Co., Ltd., Suzhou, Jiangsu 215000 (CN)
(72) Inventor: HAN, Hongrui, Suzhou, Jiangsu 215000 (CN)
(74) Representative: Studio Torta S.p.A.
(86) International application number: PCT/CN2023/140755
(87) International publication number: WO 2024/149044

(56) References cited:
- CN-A- 101 635 019
- CN-A- 101 635 019
- CN-A- 111 399 919
- CN-A- 111 399 919
- CN-A- 115 329 321
- CN-A- 115 729 647
- US-A1- 2018 144 135

## Description

### Cross-Reference to Related Application

The present disclosure claims the priority to Chinese Patent Application No. 202310023973.6, filed to the China National Intellectual Property Administration on January 09, 2023 and entitled "Server Startup Management System and Method".

### Technical Field

The present disclosure relates to the technical field of servers, and in particular, to a server startup management system and method.

### Background

With the rapid development of Internet technologies, cloud services and cloud computing are booming, and more and more servers are deployed. The servers are not limited to a fixed machine room in the past, and present multi-place multi-center distributed deployment. An operation and maintenance management network of the servers inevitably needs to be connected to the Internet for unified management. The current network environment is more complex, and the situation of virus and hacker intrusion and destruction is becoming more prominent. A BMC (Baseboard Management Controller) plays a role of system management in a server, and is also a weak link. An BMC firmware update is usually slow, so that many of the latest security policies and security patches are missing or not updated in time. As a result, the BMS is easily compromised, and a malicious illegitimate firmware can even be flashed, bypassing the current security measures, thereby seriously affecting the normal operation of a computer system and the security of a server system.

Aiming at the problems in the related art, such as how to ensure secure startup of a server, no effective solution has been proposed.

Document CN111399919A discloses a starting method of a server, which is applied to CP L D, wherein the CP L D is respectively connected with a first storage device stored with BMC firmware, a second storage device stored with BIOS firmware, a security chip, BMC and a PCH, the starting method comprises the steps of judging whether the security chip is in place or not when the server is powered on, communicating the security chip to respectively check the BMC firmware and the BIOS firmware to obtain a first check result and a second check result if the security chip is in place, and controlling the server to start when the first check result and the second check result are both successful.

Document CN101635019A discloses an encryption system of an embedded software program based on a safety MCU (microprogrammed control Unit), which adopts the safety MCU comprising a microcontroller and a verification module A; the verification module A comprises a random number generator, an encryption module A, a decryption module B and a comparison verification unit; the embedded program firmware comprises a main processor and an authentication module B; the verification module B comprises a decryption module A, an encryption module B and a comparison verification unit; the system adopts a bidirectional verification mode that the encryption method of the MCU corresponds to the decryption method of the firmware, and the encryption method of the firmware corresponds to the decryption method of the MCU, so that the program encryption is realized.

### Summary

Some embodiments of the present disclosure provide a server startup management system and method.

According to a first aspect, some embodiments of the present disclosure provide a server startup management system, comprising:
a Micro-Controller Unit (MCU), a storage module, a Baseboard Management Controller (BMC) and a Central Processing Unit (CPU);
the MCU is configured to control running and stopping of the BMC and the CPU, and the MCU verifies at least one of the BMC and the CPU, reads firmware data in the storage module, and obtains a security verification result or a vulnerability verification result;
the storage module is configured to store firmware data of the BMC and firmware data of the CPU; and
at least one of the BMC and the CPU is configured to start up normally on the basis of the security verification result of the MCU, or to prohibit startup on the basis of the vulnerability verification result of the MCU.

According to a second aspect, some embodiments of the present disclosure further provide a server startup management method, comprising:
an MCU verifies at least one of a BMC and a CPU, reads firmware data in a storage module, and obtains a security verification result or a vulnerability verification result; and
the MCU controls normal startup at least one of the BMC and the CPU on the basis of the security verification result, or prohibits normal startup at least one of the BMC and the CPU on the basis of the vulnerability verification result.

According to a third aspect, some embodiments of the present disclosure further provide an electronic device, comprising a memory, a processor, and a computer program stored on the memory and capable of running on the processor. The program, when being executed by the processor, implements the server startup management method according to any one of the embodiments above.

According to a fourth aspect, some embodiments of the present disclosure further provide a non-transitory readable storage medium. The non-transitory readable storage medium stores a computer program which, when being executed by a processor, implements the server startup management method according to any one of the embodiments above.

According to a fifth aspect, some embodiments of the present disclosure further provide a computer program product. The computer program product comprises a computer program which, when being executed by a processor, implements the server startup management method according to any one of the embodiments above.

According to the server startup management system provided in some embodiments of the present disclosure, an MCU verifies at least one of a BMC and a CPU, reads firmware data in a storage module, and obtains a security verification result and a vulnerability verification result; and the MCU clamps normal startup at least one of the BMC and the CPU on the basis of the security verification result, or prohibits normal startup at least one of the BMC and the CPU on the basis of the vulnerability verification result.

### Brief Description of the Drawings

In order to describe the technical solutions in the embodiments of the present disclosure or in the related art more clearly, hereinafter, accompanying drawings requiring to be used for describing the embodiments or the related art are introduced briefly. Apparently, the accompanying drawings in the following description relate to some embodiments of the present disclosure, and for a person of ordinary skill in the art, other embodiments can also be derived from these accompanying drawings without involving any inventive effort.
Fig. 1 is a first schematic structural diagram of a server startup management system provided according to embodiments of the present disclosure;
Fig. 2 is a second schematic structural diagram of a server startup management system provided according to embodiments of the present disclosure;
Fig. 3 is a third schematic structural diagram of a server startup management system provided according to embodiments of the present disclosure;
Fig. 4 is a first schematic flowchart of a server startup management method provided according to embodiments of the present disclosure;
Fig. 5 is a second schematic flowchart of a server startup management method provided according to embodiments of the present disclosure;
Fig. 6 is a third schematic flowchart of a server startup management method provided according to embodiments of the present disclosure;
Fig. 7 is a fourth schematic flowchart of a server startup management method provided according to embodiments of the present disclosure; and
Fig. 8 is a schematic structural diagram of an electronic device provided according to embodiments of the present disclosure.

### Detailed Description of the Embodiments

To make the objects, technical solutions and advantages of the embodiments of the present disclosure clearer, hereinafter, the technical solutions in the embodiments of the present disclosure will be described clearly and thoroughly with reference to the accompanying drawings of the embodiments of the present disclosure. Obviously, the embodiments as described are some of the embodiments of the present disclosure, and are not all of the embodiments. All other embodiments obtained by a person of ordinary skill in the art on the basis of the embodiments of the present disclosure without involving any inventive effort shall all fall within the scope of protection of some embodiments of the present disclosure.

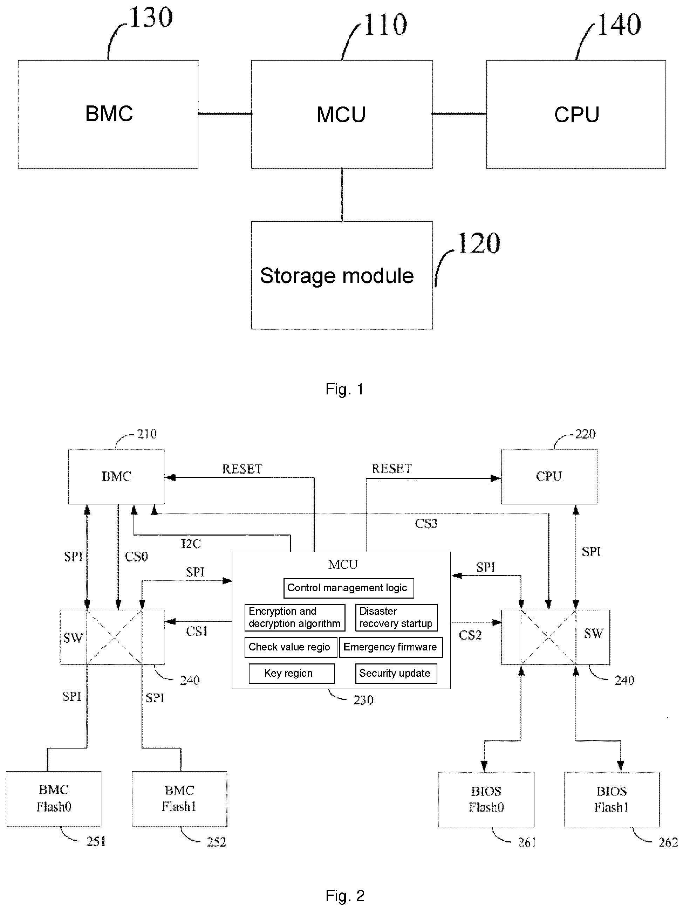

Referring to Fig. 1, the server startup management system provided in some embodiments of the present disclosure comprises, but is not limited to, the following modules:
an MCU 110, a storage module 120, a BMC 130, and a CPU (Central Processing Unit) module 140;
the MCU 110 is configured to control running and stopping of the BMC 130 and the CPU 140, and the MCU 110 verifies at least one of the BMC 130 and the CPU 140, reads firmware data in the storage module 120, and obtains a security verification result or a vulnerability verification result;
the storage module 120 is configured to store firmware data of the BMC 130 and firmware data of the CPU 140; and
at least one of the BMC 130 and the CPU 140 is configured to start up normally on the basis of the security verification result of the MCU 110, or to prohibit startup on the basis of the vulnerability verification result of the MCU 110.

In some embodiments, the MCU in the present embodiment, i.e. a microcontroller unit, is configured to implement the server startup management system. The main functions may comprise: the function of clamping startup of the BMC and the CPU, and preventing malicious software from starting up and running. The function of checking the integrity and security of data in a Flash; a security key function; and the security key being burned with firmware and locked, so that an MCU program cannot be modified. A firmware self-healing function for providing disaster recovery startup and emergency firmware; clearing illegitimate firmware, security upgrade, and other functions.

The BMC is a central hub for entire-system monitoring, management and external interaction in a server system, and is an indispensable bridgehead in the server. The BMC has great authority and has a significant effect on the entire system, and thus the security of firmware thereof is becoming more important. Once the BMC is hacked or malicious software is run, the entire server can be hijacked and controlled.

The CPU, i.e. the central processing unit module, is a core computing unit for running an operating system and customer services.

The storage module, i.e. a storage chip, is mainly used for storing firmware data of the BMC or a BIOS (Basic Input Output System), and may use a Flash chip. In practical applications, a single Flash or dual Flashes may be used.

The MCU performs encryption and decryption calculation on the data in the storage module Flash according to a set encryption and decryption algorithm and an unmodifiable security key stored in a key region, to obtain a security check value. Then, the obtained security check value is compared with a security check value stored in the storage module Flash. If they match, it indicates that the data is complete, and a security verification result is generated. If they do not match, it indicates that the firmware is damaged or tampered with, and has a security vulnerability, and a vulnerability verification result is generated.

According to the server startup management system provided in some embodiments of the present disclosure, an MCU verifies at least one of a BMC and a CPU, reads firmware data in a storage module, and obtains a security verification result and a vulnerability verification result; and the MCU clamps normal startup at least one of the BMC and the CPU on the basis of the security verification result, or prohibits normal startup at least one of the BMC and the CPU on the basis of the vulnerability verification result. In the present disclosure, the startup of the BMC and the CPU is clamped by means of the MCU, and the secure startup of a server is realized by means of security check, thereby ensuring the normal operation of a computer system and the security of a server system.

In some embodiments, the storage module comprises first storage firmware and second storage firmware; and
the first storage firmware is configured to store the firmware data of the BMC, and the second storage firmware is configured to store the firmware data of the CPU.

It can be understood that when the storage module uses dual Flashes, the storage module may be divided into first storage firmware denoted as Flash0, and second storage firmware denoted as Flash1. Compared with a single Flash, the dual Flashes have a slightly more complicated design and higher security, so that after firmware in one Flash is damaged, another Flash can be used for backup.

In some embodiments, the MCU can be configured to:
read firmware data of the first storage firmware and firmware data of the second storage firmware;
determine that a verification result corresponding to the first storage firmware is the security verification result, and determine that the first storage firmware is secure firmware, or determine that a verification result corresponding to the second storage firmware is the security verification result, and determine that the second storage firmware is secure firmware;
determine that the verification result corresponding to the second storage firmware is the vulnerability verification result, and determine that the second storage firmware is vulnerable firmware, or determine that the verification result corresponding to the first storage firmware is the vulnerability verification result, and determine that the first storage firmware is vulnerable firmware; and
synchronize the secure firmware into the vulnerable firmware.

In some embodiments, the MCU reads firmware data in the first storage firmware and the second storage firmware of the dual Flashes of the storage module, and if one firmware is secure, that is, the check result is a security verification result, and the other has a vulnerable check result, then synchronizes the secure firmware into the firmware which fails to pass the check.

In some embodiments, a gating module is further comprised;
the gating module is configured to control a connection between the MCU and the first storage firmware, or a connection between the MCU and the second storage firmware.

In some embodiments, the gating module comprises a dual control port; and
the gating module is configured to, on the basis of a switching logic, enable the MCU to be connected to the first storage firmware and the second storage firmware through the dual control port.

The gating module in the present embodiment is composed of a Switch (switch chip), which may select a corresponding switch chip, and may also be realized by a CPLD (Complex Programmable Logic Device). The present gating module has a dual control port and a switching logic for implementing that the BMC and the MCU can control gating requirements of Flashes. At the same time, it is necessary to logically avoid switching two Flashes to one channel.

In some embodiments, the BMC is connected to the first storage firmware or the second storage firmware on the basis of a Serial Peripheral Interface (SPI) bus, and the MCU is connected to the first storage firmware or the second storage firmware on the basis of the SPI bus.

In some embodiments, the BMC switches, on the basis of a first chip select CS signal (Chip Select, a control signal for selecting a specific chip), connection between the BMC and the first storage firmware or the second storage firmware; and
the MCU switches, on the basis of a second Chip Select (CS) signal, a connection between the MCU and the first storage firmware, or a connection between the MCU and the second storage firmware.

In some embodiments, the MCU is further configured to:
after a server is powered on, clamp Reset pins of the BMC and the CPU on the basis of Reset signals, and prevent the BMC and the CPU from starting up;
obtain a security verification result after firmware verification or update of the BMC and the CPU is successful; and
release the Reset pins of the BMC and the CPU on the basis of the security verification result, such that the BMC and the CPU start up normally.

In some embodiments, before performing firmware data check, the MCU in the present embodiment is powered on first, and clamps the startup of the MCU and the CPU by pulling down the Reset pins thereof. In this case, the MCU performs integrity and security check on the firmware of the BMC and the BIOS. After the verification succeeds, the MCU releases the corresponding Reset signals, such that the MCU and the CPU start to load firmware from the Flash for startup.

A security verification result is obtained after firmware check or update of the BMC and the CPU is successful, and the Reset pins of the BMC and the CPU are released on the basis of the security verification result, such that the BMC and the CPU start up normally.

In some embodiments, the MCU is further configured to:
in cases where verification results corresponding to the first storage firmware and the second storage firmware are both the vulnerability verification result, determine whether a disaster recovery startup option is set; and
in cases where disaster recovery startup is not set, maintain clamping of the Reset signals on the Reset pins of the BMC and the CPU, and record a system log and give a buzzer alarm.

In the present embodiment, when neither the verification result of the first storage firmware Flash0 nor the verification result of the second storage firmware Flash1 is passed, that is, the verification results are both the vulnerability verification result, the MCU needs to determine whether a disaster recovery startup option is set in the system.

If the disaster recovery startup function is not enabled, the MCU maintains clamping of the reset signals of the BMC and the CPU, not allowing the system to start up, and records a log and gives a buzzer alarm at the same time.

In some embodiments, the MCU is further configured to:
in cases where disaster recovery startup is set, clear the first storage firmware corresponding to the BMC and the second storage firmware corresponding to the CPU; and
refresh emergency startup firmware into the first storage firmware or the second storage firmware, such that the BMC or the CPU starts up the emergency startup firmware.

In some embodiments, the BMC or CPU can be configured to:
after the emergency startup firmware is started up, download new BMC firmware or new CPU firmware from a target address, such that the MCU determines security of the BMC firmware or the CPU firmware; and
upon determining that the BMC firmware or the CPU firmware is secure, refresh the first storage firmware or the second storage firmware, obtain an update completion notification and send same to the MCU.

If the disaster recovery startup function is set, the MCU clears the firmware data in the Flash of the BMC, and then refreshes the emergency startup firmware in the MCU into the Flash, such that the BMC starts up the emergency firmware.

After the security emergency firmware is started up, the latest BMC firmware is downloaded from a specified address, and the MCU assists in verifying the security of the firmware, and after the security is confirmed, the BMC refreshes the Flash again. The MCU is notified after the update is completed.

By the same reasoning, when the BIOS firmware of the CPU fails to pass the verification, the MCU notifies the CPU to perform a security update on the BIOS firmware. The CPU downloads the corresponding BIOS firmware from a specified address, and verifies and updates the BIOS firmware, and the MCU continues to perform the process after the update is completed. Otherwise, the CPU is always clamped to prohibit startup thereof. After the BIOS firmware is verified or updated successfully, the MCU releases the Reset signal of the CPU, such that the CPU starts up securely.

It should be noted that during normal operation of the system, the MCU assists the BMC in performing a firmware security upgrade operation. The BMC sends information to the MCU to verify an upgrade package. The verification result is fed back to the BMC, and the BMC determines, according to the result, whether to update the firmware.

In some embodiments, the MCU receives the update completion notification of the BMC or the CPU on the basis of an Inter-Integrated Circuit (I2C) bus.

Referring to Fig. 2, Fig. 2 is a schematic diagram of a server startup management system with dual Flashes provided according to embodiments of the present disclosure, comprising a BMC 210, a CPU 220, an MCU 230, an SW 240, BMC Flash0 251, BMC Flash1 252, BIOS Flash0 261, and BIOS Flash1 262.

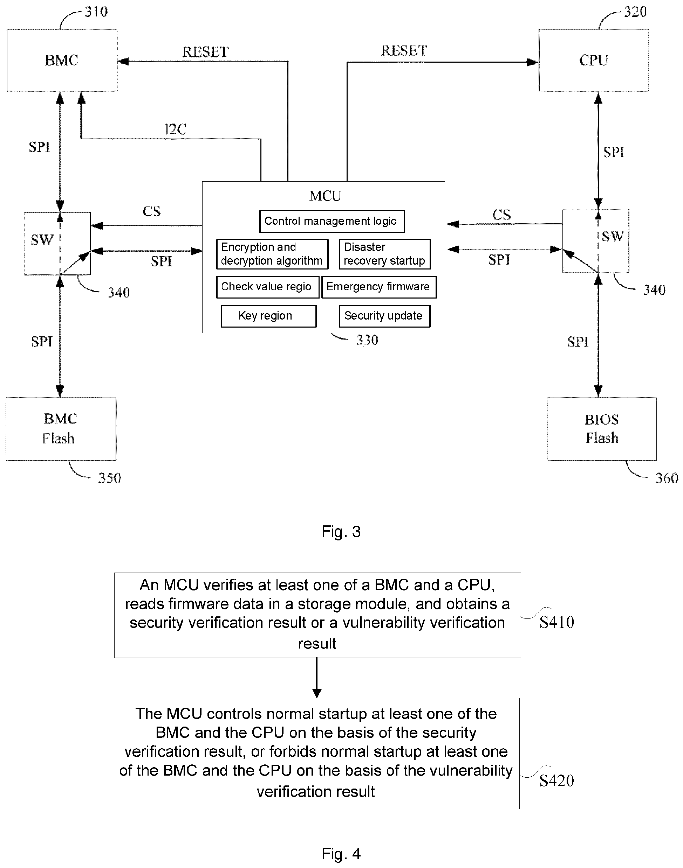

Referring to Fig. 3, Fig. 3 is a schematic diagram of a server startup management system with a single Flash provided according to embodiments of the present disclosure, comprising a BMC 310, a CPU 320, an MCU 330, an SW 340, a BMC Flash 350, and a BIOS Flash 360.

The SPI is a main channel for realizing data communication, for example, the BMC is connected to a Flash by means of an SPI bus, and can read a program from the Flash for startup, and can also store data into the Flash. The MCU is connected to a Flash by means of an SPI bus, and can read data for integrity and legitimacy check.

CS signal: the chip select signal is used to control an SPI bus connection mode of a gate. For example, CS0 is used by the BMC to control the gate for switching and selecting the connection relationship between the BMC and the two Flashes of the BMC. CS1 is used by the MCU to control the gate for switching and selecting the connection relationship between the MCU and the Flash.

The I2C bus is configured for communication between the BMC and the MCU. For example, when the firmware is updated by means of the BMC, the BMC needs to notify the MCU by means of the I2C bus, and the MCU needs to verify the legitimacy of the firmware, so as to implement security update of the firmware.

The present disclosure breaks the mechanism of performing integrity and security verification on the basis of a BMC in the past, and uses a third-party physical MCU, firmware of which cannot be updated, to perform integrity and security verification. Furthermore, the startup of the BMC and the CPU is clamped at the first time, and after the security of the firmware of the BMC and the CPU is confirmed, these modules are allowed to run, so that the risk of the BMC and BIOS firmware being illegitimately and maliciously modified or replaced is completely avoided physically.

Furthermore, the MCU can also destroy identified illegitimate malicious firmware, and provides the functions of disaster recovery startup and emergency firmware, which are configured for emergency startup of a server and automatic recovery (quick self-healing) of a legitimate secure firmware, reducing manual maintenance time, reducing the effect on services and reducing maintenance costs.

Referring to Fig. 4, the server startup management method provided according to embodiments of the present disclosure comprises the following steps:
step 410: an MCU verifies at least one of a BMC and a CPU, reads firmware data in a storage module, and obtains a security verification result or a vulnerability verification result; and
step 420: the MCU controls normal startup at least one of the BMC and the CPU on the basis of the security verification result, or forbids normal startup at least one of the BMC and the CPU on the basis of the vulnerability verification result.

In some embodiments, the MCU in the present embodiment, i.e. a microcontroller unit, is configured to implement a server startup management system. The main functions may comprise: the function of clamping startup of the BMC and the CPU, and preventing malicious software from starting up and running. The function of verifying the integrity and security of data in a Flash; a security key function; and the security key being burned with firmware and locked, so that an MCU program cannot be modified. A firmware self-healing function for providing disaster recovery startup and emergency firmware; clearing illegitimate firmware, security upgrade, and other functions.

The BMC is a central hub for entire-system monitoring, management and external interaction in a server system, and is an indispensable bridgehead in the server. The BMC has great authority and has a significant effect on the entire system, and thus the security of firmware thereof is becoming more important. Once the BMC is hacked or malicious software is run, the entire server can be hijacked and controlled.

The CPU, i.e. the central processing unit module, is a core computing unit for running an operating system and customer services.

The storage module, i.e. a storage chip, is mainly used for storing firmware data of the BMC or a BIOS (Basic Input Output System), and may use a Flash chip. In practical applications, a single Flash or dual Flashes may be used.

In step 410 above, the MCU performs encryption and decryption calculation on the data in the storage module Flash according to a set encryption and decryption algorithm and an unmodifiable security key stored in a key region, to obtain a security check value. Then, the obtained security check value is compared with a security check value stored in the storage module Flash. If they match, it indicates that the data is complete, and a security verification result is generated. If they do not match, it indicates that the firmware is damaged or tampered with, and has a security vulnerability, and a vulnerability verification result is generated.

In step 420 above, the MCU controls normal startup at least one of the BMC and the CPU on the basis of the security verification result, or prohibits normal startup at least one of the BMC and the CPU on the basis of the vulnerability verification result.

According to the server startup management system provided in some embodiments of the present disclosure, an MCU verifies at least one of a BMC and a CPU, reads firmware data in a storage module, and obtains a security verification result or a vulnerability verification result; and the MCU clamps normal startup at least one of the BMC and the CPU on the basis of the security verification result, or prohibits normal startup at least one of the BMC and the CPU on the basis of the vulnerability verification result. In the present disclosure, the startup of the BMC and the CPU is clamped by means of the MCU, and the secure startup of a server is realized by means of security verification, thereby ensuring the normal operation of a computer system and the security of a server system.

In some embodiments, the storage module comprises first storage firmware and second storage firmware; and
the method further comprises:
firmware data of the first storage firmware and firmware data of the second storage firmware are read;
it is determined that a verification result corresponding to the first storage firmware is the security verification result, and it is determined that the first storage firmware is secure firmware, or it is determined that a verification result corresponding to the second storage firmware is the security verification result, and it is determined that the second storage firmware is secure firmware;
it is determined that the verification result corresponding to the second storage firmware is the vulnerability verification result, and it is determined that the second storage firmware is vulnerable firmware, or it is determined that the verification result corresponding to the first storage firmware is the vulnerability verification result, and it is determined that the first storage firmware is vulnerable firmware; and
the secure firmware is synchronized into the vulnerable firmware.

It can be understood that when the storage module uses dual Flashes, the storage module may be divided into first storage firmware denoted as Flash0, and second storage firmware denoted as Flash1. Compared with a single Flash, the dual Flashes have a slightly more complicated design and higher security, so that after firmware in one Flash is damaged, another Flash can be used for backup.

In some embodiments, the MCU reads firmware data in the first storage firmware and the second storage firmware of the dual Flashes of the storage module, and if one firmware is secure, that is, the check result is a security verification result, and the other has a vulnerable check result, then synchronizes the secure firmware into the firmware which fails to pass the check.

In some embodiments, the method further comprises:
in cases where the verification results corresponding to the first storage firmware and the second storage firmware are both the vulnerability verification result, whether a disaster recovery startup option is set is determined;
in cases where disaster recovery startup is not set, clamping of Reset signals on Reset pins of the BMC and the CPU is maintained, and a system log is recorded and a buzzer alarm is given;
in cases where disaster recovery startup is set, the first storage firmware corresponding to the BMC and the second storage firmware corresponding to the CPU are cleared; and
emergency startup firmware is refreshed into the first storage firmware or the second storage firmware, such that the BMC or the CPU starts up the emergency startup firmware.

In the present embodiment, when neither the verification result of the first storage firmware Flash0 nor the verification result of the second storage firmware Flash1 is passed, that is, the verification results are both the vulnerability verification result, the MCU needs to determine whether a disaster recovery startup option is set in the system.

If the disaster recovery startup function is not enabled, the MCU maintains clamping of the reset signals of the BMC and the CPU, not allowing the system to start up, and records a log and gives a buzzer alarm at the same time.

If the disaster recovery startup function is set, the MCU clears the firmware data in the Flash of the BMC, and then refreshes the emergency startup firmware in the MCU into the Flash, such that the BMC starts up the emergency firmware.

After the security emergency firmware is started up, the latest BMC firmware is downloaded from a specified address, and the MCU assists in verifying the security of the firmware, and after the security is confirmed, the BMC refreshes the Flash again. The MCU is notified after the update is completed.

By the same reasoning, when the BIOS firmware of the CPU fails to pass the verification, the MCU notifies the CPU to perform a security update on the BIOS firmware. The CPU downloads the corresponding BIOS firmware from a specified address, and verifies and updates the BIOS firmware, and the MCU continues to perform the process after the update is completed. Otherwise, the CPU is always clamped to prohibit startup thereof. After the BIOS firmware is verified or updated successfully, the MCU releases the Reset signal of the CPU, such that the CPU starts up securely.

It should be noted that during normal operation of the system, the MCU assists the BMC in performing a firmware security upgrade operation. The BMC sends information to the MCU to verify an upgrade package. The verification result is fed back to the BMC, and the BMC determines, according to the verification result, whether to update the firmware.

In some embodiments, before the MCU verifies at least one of the BMC and the CPU, the method further comprises:
after a server is powered on, the Reset pins of the BMC and the CPU are clamped on the basis of the Reset signals, and the BMC and the CPU are prevented from starting up.

In some embodiments, the MCU controlling normal startup at least one of the BMC and the CPU on the basis of the security verification result comprises:
the security verification result is obtained after firmware check or update of the BMC and the CPU is successful; and
the Reset pins of the BMC and the CPU are released on the basis of the security verification result, such that the BMC and the CPU start up normally.

In some embodiments, before performing firmware data check, the MCU in the present embodiment is powered on first, and clamps the startup of the MCU and the CPU by pulling down the Reset pins thereof. In this case, the MCU performs integrity and security check on the firmware of the BMC and the BIOS. After the verification succeeds, the MCU releases the corresponding Reset signals, such that the MCU and the CPU start to load firmware from the Flash for startup.

A security verification result is obtained after firmware check or update of the BMC and the CPU is successful, and the Reset pins of the BMC and the CPU are released on the basis of the security verification result, such that the BMC and the CPU start up normally.

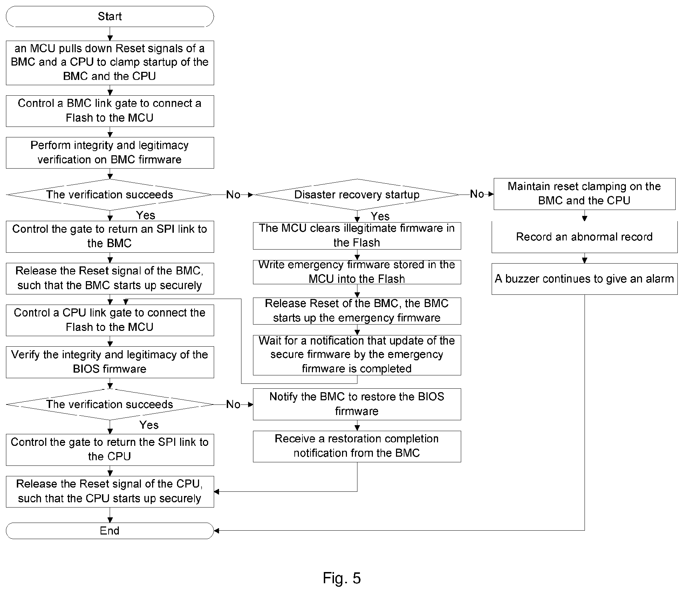

Referring to Fig. 5, Fig. 5 is a processing flowchart of a server startup management method involving a single Flash.

After the flow starts, an MCU pulls down Reset signals of a BMC and a CPU to clamp startup of the BMC and the CPU, controls a BMC link gate to connect a Flash to the MCU, and performs integrity and legitimacy verification on BMC firmware, which can be recorded as a first verification.

When the first verification succeeds, the gate is controlled to return an SPI link to the BMC; the Reset signal of the BMC is released, such that the BMC starts up securely; a CPU link gate is controlled to connect the Flash to the MCU; and the integrity and legitimacy of the BIOS firmware are verified, which can be recorded as a second verification.

When the first verification fails, it is determined whether disaster recovery startup is set. In cases where disaster recovery startup is set, the MCU clears illegitimate firmware in the Flash; emergency firmware stored in the MCU is written into the Flash; Reset of the BMC is released; and the BMC starts up the emergency firmware, waits for a notification that update of the secure firmware by the emergency firmware is completed, and returns to the step of controlling the CPU link gate to connect the Flash to the MCU. In cases where disaster recovery startup is not set, reset clamping on the BMC and the CPU is maintained, an abnormal record is recorded, and a buzzer continues to give an alarm until the process ends.

When the second verification succeeds, the gate is controlled to return the SPI link to the CPU, and the Reset signal of the CPU is released, such that the CPU starts up securely until the process ends.

When the second verification fails, the BMC is notified to restore the BIOS firmware, and upon receipt of a restoration completion notification from the BMC, the step of releasing the Reset signal of the CPU so as to enable the CPU to start up securely is returned to.

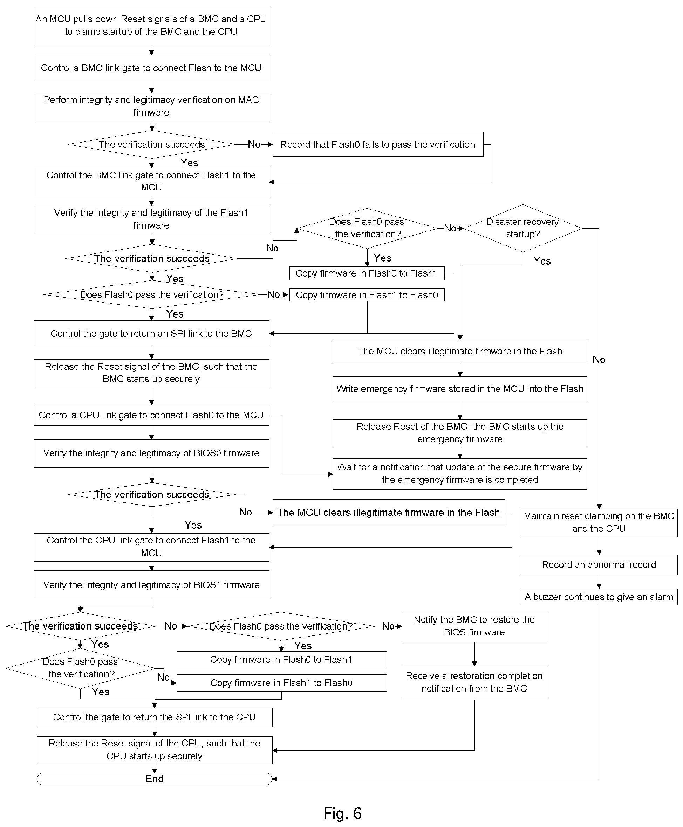

Referring to Fig. 6, Fig. 6 is a processing flowchart of a server startup management method involving dual Flashes.

After the flow starts, an MCU pulls down Reset signals of a BMC and a CPU to clamp startup of the BMC and the CPU, controls a BMC link gate to connect Flash0 to the MCU, and performs integrity and legitimacy verification on Flash0 firmware, which can be recorded as a first verification.

When the first authentication succeeds, the BMC link gate is controlled to connect Flash1 to the MCU, and the integrity and legitimacy of the Flash1 firmware are verified, which can be recorded as a second authentication. When the first verification fails, it is recorded that Flash0 fails to pass the verification.

When the second verification succeeds, it is determined whether Flash0 has passed the verification. In cases where Flash0 fails to pass the verification, firmware in Flash1 is copied to Flash0. In cases where Flash0 has passed the verification, the gate is controlled to return an SPI link to the BMC; the Reset signal of the BMC is released, such that the BMC starts up securely; a CPU link gate is controlled to connect Flash0 to the MCU; and the integrity and legitimacy of the BIOS firmware are verified, which can be recorded as a third verification.

When the second authentication fails, it is verified whether Flash0 has passed the verification. In cases where Flash0 has passed the verification, firmware in Flash0 is copied to Flash1. In cases where Flash0 fails to pass the verification, it is determined whether disaster recovery startup is set. In cases where disaster recovery startup is set, the MCU clears illegitimate firmware in the Flash; emergency firmware stored in the MCU is written into the Flash; Reset of the BMC is released; and the BMC starts up the emergency firmware, and waits for a notification that update of the secure firmware by the emergency firmware is completed. In cases where disaster recovery startup is not set, reset clamping on the BMC and the CPU is maintained, an abnormal record is recorded, and a buzzer continues to give an alarm until the process ends.

When the third verification succeeds, it is verified whether Flash0 has passed the verification. In cases where Flash0 has passed the verification, the gate is controlled to return the SPI link to the CPU, and the Reset signal of the CPU is released, such that the CPU starts up securely until the process ends. In cases where Flash0 fails to pass the verification, firmware in Flash1 is copied to Flash0.

In cases where the third verification fails, it is verified whether Flash0 has passed the verification. In cases where Flash0 has passed the verification, firmware in Flash0 is copied to Flash1. In cases where Flash0 fails to pass the verification, the BMC is notified to restore the BIOS firmware, and upon receipt of a restoration completion notification from the BMC, the step of releasing the Reset signal of the CPU so as to enable the CPU to start up securely is returned to.

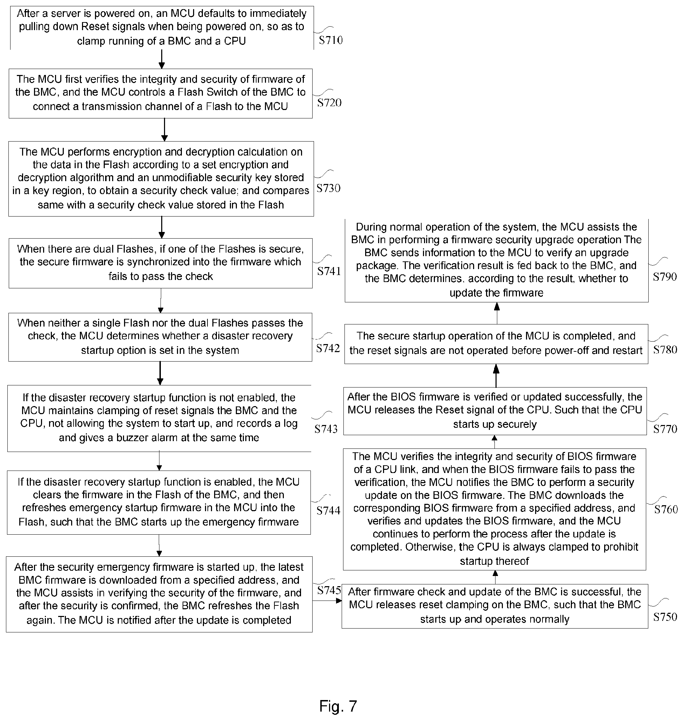

Referring to Fig. 7, a complete flowchart of the server startup management method provided according to embodiments of the present disclosure comprises:
step 710: after a server is powered on, an MCU defaults to immediately pulling down Reset signals when being powered on, so as to clamp running of a BMC and a CPU.

Step 720: the MCU first verifies the integrity and security of firmware of the BMC, and the MCU controls a Flash Switch of the BMC to connect a transmission channel of a Flash to the MCU (in this way, the MCU can read and operate data of the Flash).

Step 730: the MCU performs encryption and decryption calculation on the data in the Flash according to a set encryption and decryption algorithm and an unmodifiable security key stored in a key region, to obtain a security check value; and compares same with a security check value stored in the Flash. If they match, it indicates that the data is complete. If they do not match, it indicates that the firmware is damaged or tampered with, and has a security vulnerability.

If the check fails, there are several processing methods:
step 741: when there are dual Flashes, if one of the Flashes is secure, the secure firmware is synchronized into the firmware which fails to pass the check.
Step 742: when neither a single Flash nor the dual Flashes passes the check, the MCU determines whether a disaster recovery startup option is set in the system.
Step 743: if the disaster recovery startup function is not enabled, the MCU maintains clamping of the reset signals the BMC and the CPU, not allowing the system to start up, and records a log and gives a buzzer alarm at the same time.
Step 744: if the disaster recovery startup function is enabled, the MCU clears the firmware in the Flash of the BMC, and then refreshes emergency startup firmware in the MCU into the Flash, such that the BMC starts up the emergency firmware.
Step 745: after the security emergency firmware is started up, the latest BMC firmware is downloaded from a specified address, and the MCU assists in verifying the security of the firmware, and after the security is confirmed, the BMC refreshes the Flash again. The MCU is notified after the update is completed.
Step 750: after firmware check and update of the BMC is successful, the MCU releases reset clamping on the BMC, such that the BMC starts up and operates normally.
Step 760: the MCU verifies the integrity and security of BIOS firmware of a CPU link, and when the BIOS firmware fails to pass the verification, the MCU notifies the BMC to perform a security update on the BIOS firmware. The BMC downloads the corresponding BIOS firmware from a specified address, and verifies and updates the BIOS firmware, and the MCU continues to perform the process after the update is completed. Otherwise, the CPU is always clamped to prohibit startup thereof.
Step 770: after the BIOS firmware is verified or updated successfully, the MCU releases the Reset signal of the CPU. Such that the CPU starts up securely.
Step 780: the secure startup operation of the MCU is completed, and the reset signals are not operated before power-off and restart.
Step 790: during normal operation of the system, the MCU assists the BMC in performing a firmware security upgrade operation. The BMC sends information to the MCU to verify an upgrade package. The verification result is fed back to the BMC, and the BMC determines, according to the result, whether to update the firmware.

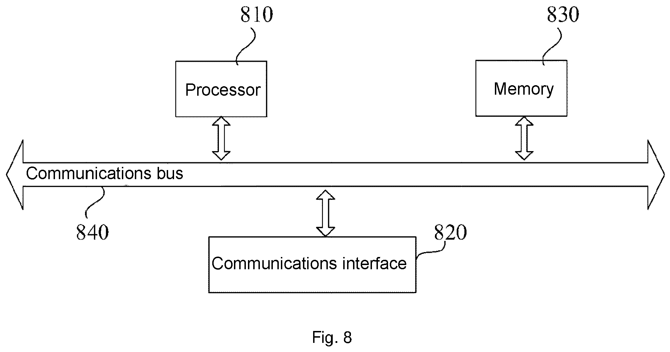

Fig. 8 illustrates a physical schematic structural diagram of an electronic device. As shown in Fig. 8, the electronic device may comprise: a processor 810, a communications interface 820, a memory 830, and a communications bus 840. The processor 810, the communications interface 820 and the memory 830 complete communication with each other by means of the communications bus 840. The processor 810 can invoke a logic instruction in the memory 830 to execute a server startup management method. The method comprises:
an MCU verifies at least one of a BMC and a CPU, reads firmware data in a storage module, and obtains a security verification result and a vulnerability verification result; and
the MCU controls normal startup at least one of the BMC and the CPU on the basis of the security verification result, or prohibits normal startup at least one of the BMC and the CPU on the basis of the vulnerability verification result.

Furthermore, the logic instruction in the memory 830 can be implemented in the form of software functional units and sold or used as an independent product, it may be stored in a non-transitory readable storage medium. On the basis of such understanding, the part of the technical solutions of the present disclosure that contributes in essence or to the related art or part of the technical solutions may be embodied in the form of a software product. The computer software product is stored in a non-transitory readable storage medium, and comprises several instructions to enable a computer device (which may be a personal computer, a server or a network device) to execute all or some of the steps of the method described in the embodiments of the present disclosure. Moreover, the described non-transitory readable storage medium comprises: media such as a USB flash disk, a mobile hard disk, a read-only memory (ROM), a random access memory (RAM), a magnetic disk or an optical disc which can store program codes.

In another aspect, some embodiments of the present disclosure further provide a computer program product. The computer program product comprises a computer program. The computer program may be stored in a non-transitory readable storage medium. When the computer program is executed by a processor, a computer can execute the server startup management method provided according to the embodiments above. The method comprises:
an MCU verifies at least one of a BMC and a CPU, reads firmware data in a storage module, and obtains a security verification result and a vulnerability verification result; and
the MCU controls normal startup at least one of the BMC and the CPU on the basis of the security verification result, or prohibits normal startup at least one of the BMC and the CPU on the basis of the vulnerability verification result.

In still another aspect, some embodiments of the present disclosure further provide a non-transitory readable storage medium. The non-transitory readable storage medium stores a computer program which, when being executed by a processor, implements the server startup management method provided according to the embodiments above. The method comprises:
an MCU verifies at least one of a BMC and a CPU, reads firmware data in a storage module, and obtains a security verification result and a vulnerability verification result; and
the MCU controls normal startup at least one of the BMC and the CPU on the basis of the security verification result, or prohibits normal startup at least one of the BMC and the CPU on the basis of the vulnerability verification result.

The apparatus embodiments as described above are merely exemplary. The units described as separate components may or may not be physically separated, and the components displayed as units may or may not be physical modules, that is, may be located in one place, or may be distributed in a plurality of network units. Some or all of the modules may be selected according to actual needs to achieve the purpose of the solutions of the embodiments. A person of ordinary skill in the art would understand and implement the embodiments without any inventive effort.

From the description of the described embodiments, a person skilled in the art would have been able to clearly understand that the embodiments may be implemented by using software and necessary general hardware platforms, and of course may also be implemented using hardware. On the basis of such understanding, the part of the technical solutions that contributes in essence or to the related art may be embodied in the form of a software product. The computer software product may be stored in a computer non-transitory readable storage medium, such as an ROM/RAM, a magnetic disk and an optical disc, and comprises several instructions to enable a computer device (which may be a personnel computer, a server or a network device) to execute the method according to the embodiments or to some of the embodiments.

## Claims

1. A server startup management system, comprising: a Micro-Controller Unit (MCU), (110) a storage module, (120) a Baseboard Management Controller (BMC) 12. (130) and a Central Processing Unit (CPU); (140)
the MCU is configured to control running and stopping of the BMC and the CPU, and the MCU verifies at least one of the BMC and the CPU, reads firmware data in the storage module, and obtains a security verification result or a vulnerability verification result;
the storage module is configured to store firmware data of the BMC and firmware data of the CPU; and
at least one of the BMC and the CPU is configured to start up on the basis of the security verification result of the MCU, or to prohibit startup on the basis of the vulnerability verification result of the MCU;
wherein the MCU is further configured to: after a server is powered on, clamp Reset pins of the BMC and the CPU on the basis of Reset signals, and prevent the BMC and the CPU from starting up; obtain the security verification result after firmware check or update of the BMC and the CPU is successful; and release the Reset pins of the BMC and the CPU on the basis of the security verification result, such that the BMC and the CPU start up

2. The server startup management system according to claim 1, wherein the storage module comprises first storage firmware and second storage firmware; and
the first storage firmware is configured to store the firmware data of the BMC, and the second storage firmware is configured to store the firmware data of the CPU.

3. The server startup management system according to claim 2, wherein the MCU is configured to:
read firmware data of the first storage firmware and firmware data of the second storage firmware;
determine that a verification result corresponding to the first storage firmware is the security verification result, and determine that the first storage firmware is secure firmware, or determine that a verification result corresponding to the second storage firmware is the security verification result, and determine that the second storage firmware is secure firmware; determine that the verification result corresponding to the second storage firmware is the vulnerability verification result, and determine that the second storage firmware is vulnerable firmware, or determine that the verification result corresponding to the first storage firmware is the vulnerability verification result, and determine that the first storage firmware is vulnerable firmware; and
synchronize the secure firmware into the vulnerable firmware.

4. The server startup management system according to claim 2, further comprising a gating module:
the gating module is configured to control a connection between the MCU and the first storage firmware, or a connection between the MCU and the second storage firmware; or
further comprising a gating module: the gating module is configured to control a connection between the MCU and the first storage firmware, or a connection between the MCU and the second storage firmware, wherein the gating module comprises a dual control port; and the gating module is configured to, on the basis of a switching logic, enable the MCU to be connected to the first storage firmware and the second storage firmware through the dual control port.

5. The server startup management system according to claim 2, wherein the BMC is connected to the first storage firmware or the second storage firmware on the basis of a Serial Peripheral Interface (SPI) bus, and the MCU is connected to the first storage firmware or the second storage firmware on the basis of the SPI bus; or
wherein the BMC switches, on the basis of a first Chip Select (CS) signal, connection between the BMC and the first storage firmware or the second storage firmware; and the MCU switches, on the basis of a second Chip Select (CS) signal, a connection between the MCU and the first storage firmware, or a connection between the MCU and the second storage firmware.

6. The server startup management system according to claim 5, wherein the MCU is further configured to:
in cases where verification results corresponding to the first storage firmware and the second storage firmware are both the vulnerability verification result, determine whether a disaster recovery startup option is set; and
in cases where the disaster recovery startup is not set, maintain clamping of the Reset signals on the Reset pins of the BMC and the CPU, and record a system log and give a buzzer alarm.

7. The server startup management system according to claim 3, wherein the MCU is further configured to:
in cases where disaster recovery startup is set, clear the first storage firmware corresponding to the BMC and the second storage firmware corresponding to the CPU; and
refresh emergency startup firmware into the first storage firmware or the second storage firmware, such that the BMC or the CPU starts up the emergency startup firmware.

8. The server startup management system according to claim 7, wherein the MCU or the CPU is further configured to:
after the emergency startup firmware is started up, download new BMC firmware or new CPU firmware from a target address, such that the MCU determines security of the BMC firmware or the CPU firmware; and
upon determining that the BMC firmware or the CPU firmware is secure, refresh the first storage firmware or the second storage firmware, obtain an update completion notification and send same to the MCU.

9. The server startup management system according to claim 8, wherein the MCU receives the update completion notification of the BMC or the CPU on the basis of an Inter-Integrated Circuit (I2C) bus.

10. The server startup management system according to claim 1, wherein the MCU is configured to: on the basis of a set encryption and decryption algorithm and an unmodifiable security key stored in a key region, perform encryption and decryption calculation on the firmware data of the storage module to obtain a security check value, and compare calculated security check value with a security check value stored in the storage module to obtain a matching result; in a case that the matching is successful, generate the security verification result; and in a case that the matching is unsuccessful, generate the vulnerability verification result; or
wherein the MCU is further configured to: enable a program of the MCU to be unmodifiable by means of a security key obtained through firmware burning; and destroy illegitimate malicious firmware, and perform emergency startup of the server on the basis of disaster recovery startup, and perform automatic recovery of legitimate secure firmware on the basis of emergency firmware..

11. The server startup management system according to claim 1, wherein the MCU is further configured to: perform a first verification on integrity and legitimacy of the BMC, in a case that the first verification is successful, release Reset signal of the BMC, such that the BMC starts up securely, control a CPU link gate to connect a Flash to the MCU, and perform a second verification on integrality and legitimacy of Basic Input Output System (BIOS)firmware, in a case of the second verification is failed , notify the BMC to restore the BIOS firmware, and in a case that restoration of the BIOS firmware is completed, enable the CPU to start up securely.

12. A server startup management method using the server startup management system according to any one of claims 1-11.

13. The server startup management method according to claim 12, wherein the storage module comprises first storage firmware and second storage firmware; and
the method further comprises:
reading firmware data of the first storage firmware and firmware data of the second storage firmware;
determining that a verification result corresponding to the first storage firmware is the security verification result, and determining that the first storage firmware is secure firmware, or determining that a verification result corresponding to the second storage firmware is the security verification result, and determine that the second storage firmware is secure firmware; determining that the verification result corresponding to the second storage firmware is the vulnerability verification result, and determining that the second storage firmware is vulnerable firmware, or determining that the verification result corresponding to the first storage firmware is the vulnerability verification result, and determine that the first storage firmware is vulnerable firmware; and
synchronizing the secure firmware into the vulnerable firmware.

14. The server startup management method according to claim 13, further comprising:
in cases where the verification results corresponding to the first storage firmware and the second storage firmware are both the vulnerability verification result, determining whether a disaster recovery startup option is set;
in cases where the disaster recovery startup is not set, maintaining clamping of Reset signals on Reset pins of the BMC and the CPU, and recording a system log and giving a buzzer alarm;
in cases where the disaster recovery startup is set, clearing the first storage firmware corresponding to the BMC and the second storage firmware corresponding to the CPU; and
refreshing emergency startup firmware into the first storage firmware or the second storage firmware, such that the BMC or the CPU starts up the emergency startup firmware.

15. The server startup management method according to claim 12, wherein before the MCU verifies at least one of the BMC and the CPU, the method further comprises:
after a server is powered on, clamping the Reset pins of the BMC and the CPU on the basis of the Reset signals, and preventing the BMC and the CPU from starting up; or
wherein the MCU controlling startup of at least one of the BMC and the CPU on the basis of the security verification result comprises: obtaining the security verification result after firmware check or update of the BMC and the CPU is successful; and releasing the Reset pins of the BMC and the CPU on the basis of the security verification result, such that the BMC and the CPU start up

## Patentansprüche

1. Server-Startverwaltungssystem bestehend aus: einer Mikrocontroller-Einheit (MCU) (110), einem Speichermodul (120), einem Baseboard-Verwaltung-Kontroller (BMC) (130) und einer Zentraleinheit (CPU) (140) ;
wobei die MCU dazu konfiguriert ist, den Betrieb und das Stoppen des BMC und der CPU zu steuern, und wobei die MCU mindestens einen der beiden, den BMC oder die CPU prüft, Firmware-Daten aus dem Speichermodul liest und ein Sicherheitsprüfungsergebnis oder ein Schwachstellenprüfungsergebnis erreicht;
das Speichermodul dazu konfiguriert ist, Firmware-Daten des BMC und Firmware-Daten der CPU zu speichern; und
mindestens eines von BMC und CPU dazu konfiguriert ist, auf der Grundlage des Sicherheitsprüfungsergebnisses der MCU zu starten oder den Start auf der Grundlage des Schwachstellenprüfungsergebnisses der MCU zu verhindern;
wobei die MCU ferner dazu konfiguriert ist um: nach dem Einschalten eines Servers, die Rücksetzen-Pins des BMC und der CPU auf der Grundlage der Rücksetzen-Signale festzuklemmen und den Start des BMC und der CPU zu verhindern; das Sicherheitsprüfungsergebnis zu erreichen, nachdem die Firmware-Prüfung oder -Aktualisierung des BMC und der CPU erfolgreich durchgeführt wurde; und die Rücksetzen-Pins des BMC und der CPU auf der Grundlage des Sicherheitsprüfungsergebnisses zu lockern, um den Start des BMC und der CPU zu ermöglichen.

2. Server-Startverwaltungssystem nach Anspruch 1, wobei das Speichermodul eine erste Speicher-Firmware und eine zweite Speicher-Firmware umfasst; und
die erste Speicher-Firmware dazu konfiguriert ist, die Firmware-Daten des BMC zu speichern, und die zweite Speicher-Firmware dazu konfiguriert ist, die Firmware-Daten der CPU zu speichern.

3. Server-Startverwaltungssystem nach Anspruch 2, wobei die MCU dazu konfiguriert ist, um:
Firmware-Daten der ersten Speicher-Firmware und Firmware-Daten der zweiten Speicher-Firmware zu lesen;
zu bestimmen, dass ein Prüfungsergebnis, das der ersten Speicher-Firmware entspricht das Sicherheitsprüfungsergebnis ist, und zu bestimmen, dass die erste Speicher-Firmware eine sichere Firmware ist, oder zu bestimmen, dass ein Prüfungsergebnis, das der zweiten Speicher-Firmware entspricht, das Sicherheitsprüfungsergebnis ist, und zu bestimmen, dass die zweite Speicher-Firmware eine sichere Firmware ist; zu bestimmen, dass das Prüfungsergebnis, das der zweiten Speicher-Firmware entspricht, Schwachstellenprüfungsergebnis ist, und zu bestimmen, dass die zweite Speicher-Firmware eine schwache Firmware ist, oder zu bestimmen, dass das Prüfungsergebnis, das der ersten Speicher-Firmware entspricht das Schwachstellenprüfungsergebnis ist, und zu bestimmen, dass die erste Speicher-Firmware eine schwache Firmware ist; und
die sichere Firmware in die schwache Firmware zu synchronisieren.

4. Server-Startverwaltungssystem nach Anspruch 2, das ferner ein Gatter-Modul umfasst:
das Gatter-Modul ist dazu konfiguriert, eine Verbindung zwischen der MCU und der ersten Speicher-Firmware oder eine Verbindung zwischen der MCU und der zweiten Speicher-Firmware zu steuern; oder
ferner umfassend ein Gatter-Modul: das Gatter-Modul ist dazu konfiguriert, eine Verbindung zwischen der MCU und der ersten Speicher-Firmware oder eine Verbindung zwischen der MCU und der zweiten Speicher-Firmware zu steuern, wobei das Gatter-Modul einen dualen Steueranschluss umfasst; und das Gatter-Modul dazu konfiguriert ist, auf der Grundlage einer Schaltlogik zu ermöglichen, dass die MCU über den dualen Steueranschluss mit der ersten Speicher-Firmware und der zweiten Speicher-Firmware verbunden wird.

5. Server-Startverwaltungssystem nach Anspruch 2, wobei das BMC auf der Grundlage von einem seriellen peripheren Schnittstellen (SPI)-Bus mit der ersten Speicher-Firmware oder der zweiten Speicher-Firmware verbunden ist und die MCU auf der Grundlage von dem SPI-Bus mit der ersten Speicher-Firmware oder der zweiten Speicher-Firmware verbunden ist; oder
wobei das BMC auf der Grundlage von einem ersten Chip-Auswahl (CS)-Signals die Verbindung zwischen dem BMC und der ersten Speicher-Firmware oder der zweiten Speicher-Firmware umschaltet; und die MCU auf der Grundlage von einem zweiten Chip-Auswahl (CS)-Signals eine Verbindung zwischen der MCU und der ersten Speicher-Firmware oder eine Verbindung zwischen der MCU und der zweiten Speicher-Firmware umschaltet.

6. Server-Startverwaltungssystem nach Anspruch 5, wobei die MCU ferner dazu konfiguriert ist, um:
in den Fällen, in denen die Prüfungsergebnisse, die der ersten Speicher-Firmware und der zweiten Speicher-Firmware entsprechen, sowohl ein Schwachstellenprüfungsergebnis als auch ein Prüfungsergebnis sind, zu bestimmen, ob eine Notfallwiederherstellung-Startoption eingestellt wird; und
in den Fällen, in denen die Notfall-Wiederherstellungsstart nicht eingestellt wird, das Festklemmen der Rücksetzen-Signale an den Rücksetzen-Pins des BMC und der CPU zu halten sowie ein System-Log aufzuzeichnen und einen Alarmsummer auszulösen.

7. Server-Startverwaltungssystem nach Anspruch 3, wobei die MCU ferner dazu konfiguriert ist, um:
in den Fällen, in denen der Notfall-Wiederherstellungsstart eingestellt wird, die erste Speicher-Firmware, die dem BMC entspricht und die zweite Speicher-Firmware, die der CPU entspricht, zu löschen; und
die Notfall-Start-Firmware in die erste Speicher-Firmware oder in die zweite Speicher-Firmware zu aktualisieren, sodass das BMC oder die CPU die Notfall-Start-Firmware startet.

8. Server-Startverwaltungssystem nach Anspruch 7, wobei die MCU oder die CPU ferner dazu konfiguriert ist, um:
nach dem Start der Notfall-Start-Firmware neue BMC-Firmware oder neue CPU-Firmware von einer Zieladresse herunterzuladen, sodass die MCU die Sicherheit der BMC-Firmware oder der CPU-Firmware bestimmt; und
Nach der Bestimmung, dass die BMC-Firmware oder die CPU-Firmware sicher ist, die erste Speicher-Firmware oder die zweite Speicher-Firmware zu aktualisieren, eine Aktualisierungsabschluss-Benachrichtigung zu erhalten und diese an die MCU zu senden.

9. Server-Startverwaltungssystem nach Anspruch 8, wobei die MCU die Aktualisierungsabschluss-Benachrichtigung des BMC oder der CPU auf der Grundlage von einem Inter-Integrierte-Schaltung-Bus (I2C) empfängt.

10. Server-Startverwaltungssystem nach Anspruch 1, wobei die MCU dazu konfiguriert ist, um: auf der Grundlage von einem eingestellten Verschlüsselung- und Entschlüsselungsalgorithmus und einem unveränderbaren Sicherheitsschlüssels, der in einem Schlüsselbereich gespeichert wird, eine Verschlüsselung- und Entschlüsselungsberechnung an den Firmware-Daten des Speichermoduls durchzuführen, um einen Sicherheitsprüfwert zu erhalten, und den berechneten Sicherheitsprüfwert mit einem in dem Speichermodul gespeicherten Sicherheitsprüfwert zu vergleichen, um ein Übereinstimmungsergebnis zu erhalten; im Falle einer erfolgreichen Übereinstimmung das Sicherheitsprüfungsergebnis zu erzeugen; und im Falle einer erfolglosen Übereinstimmung das Schwachstellenprüfungsergebnis zu erzeugen; oder
wobei die MCU ferner dazu konfiguriert ist, um: einem Programm der MCU mittels eines Sicherheitsschlüssels, der durch das Firmware-Brennen erhalten wird, zu ermöglichen, unveränderbar zu sein; und unrechtmäßige, bösartige Firmware zu zerstören, und einen Notfallstart des Servers auf der Grundlage von einem Notfall-Wiederherstellungsstart durchzuführen und eine automatische Wiederherstellung der rechtmäßigen, sicheren Firmware auf der Grundlage von dem Notfall-Firmware durchzuführen.

11. Server-Startverwaltungssystem nach Anspruch 1, wobei die MCU ferner dazu konfiguriert ist, um: eine erste Prüfung der Integrität und Legitimität des BMC durchzuführen; im Falle einer ersten erfolgreichen Prüfung, ein Rücksetzen-Signal des BMC zu senden, sodass der BMC sicher startet; ein CPU-Verbindungsgatter zu steuern, um einen Flash-Speicher mit der MCU zu verbinden; und eine zweite Prüfung der Integrität und Legitimität der Basic Input Output System (BIOS)-Firmware durchzuführen; falls die zweite Prüfung fehlschlägt, das BMC anzuweisen, die BIOS-Firmware wiederherzustellen; und in einem Fall, dass die Wiederherstellung der BIOS-Firmware abgeschlossen ist, den sicheren CPU-Start zu ermöglichen.

12. Server-Startverwaltungsverfahren unter Verwendung des Server-Startverwaltungssystems nach einem der Ansprüche 1 bis 11.

13. Server-Startverwaltungsverfahren nach Anspruch 12, wobei das Speichermodul eine erste Speicher-Firmware und eine zweite Speicher-Firmware umfasst; und
wobei das Verfahren ferner umfasst:
Lesen von Firmware-Daten der ersten Speicher-Firmware und von Firmware-Daten der zweiten Speicher-Firmware;
Bestimmen, dass ein Prüfungsergebnis, das der ersten Speicher-Firmware entspricht, das Sicherheitprüfungsergebnis ist, und Bestimmen, dass die erste Speicher-Firmware eine sichere Firmware ist, oder Bestimmen, dass ein Prüfungsergebnis, das der zweiten Speicher-Firmware entspricht das Sicherheitsprüfungsergebnis ist, und Bestimmen, dass die zweite Speicher-Firmware eine sichere Firmware ist; Bestimmen, dass das Prüfungsergebnis, das der zweiten Speicher-Firmware entspricht, das Schwachstellenprüfungsergebnis ist, und Bestimmen, dass die zweite Speicher-Firmware eine schwache Firmware ist, oder Bestimmen, dass das Prüfungsergebnis, das der ersten Speicher-Firmware entspricht, das Schwachstellenprüfungsergebnis ist, und Bestimmen, dass die erste Speicher-Firmware eine schwache Firmware ist; und
Synchronisieren der sicheren Firmware in die schwache Firmware.

14. Server-Startverwaltungsverfahren nach Anspruch 13, ferner umfassend:
in den Fällen, in denen die Prüfungsergebnisse, die der ersten Speicher-Firmware und der zweiten Speicher-Firmware entsprechen beide das Schwachstellenprüfungsergebnis sind, Bestimmen, ob eine Notfallwiederherstellung-Startoption eingestellt wird;
in den Fällen, in denen das Notfallwiederherstellungsstart nicht eingestellt wird, Halten des Festklemmens der Rücksetzen-Signale an den Rücksetzen-Pins des BMC und der CPU sowie Aufzeichnen eines Systemlogs und Auslösen eines Summeralarms;
in den Fällen, in denen das Notfallwiederherstellungsstart eingestellt wird, Löschen der ersten Speicher-Firmware, die dem BMC entspricht und der zweiten Speicher-Firmware, die der CPU entspricht; und Aktualisieren einer Notfall-Start-Firmware in die erste Speicher-Firmware oder in die zweite Speicher-Firmware, sodass der BMC oder die CPU die Notfall-Start-Firmware startet.

15. Server-Startverwaltungsverfahren nach Anspruch 12, wobei das Verfahren, bevor die MCU mindestens eines von BMC und CPU prüft, ferner umfasst:
nach dem Einschalten eines Servers, Festklemmen der Rücksetzen-Pins des BMC und der CPU auf der Grundlage von den Rücksetzen-Signalen und Verhindern des Starts des BMC und der CPU; oder
wobei die MCU, die den Start von mindestens einem der BMC und CPU auf der Grundlage von dem Sicherheitsprüfungsergebnis steuert, umfasst: Erhalten des Sicherheitsprüfungsergebnisses, nachdem die Firmware-Prüfung oder -Aktualisierung des BMC und der CPU erfolgreich war; und Lösen der Rücksetzen-Pins des BMC und der CPU auf der Grundlage von dem Sicherheitsprüfungsergebnis, sodass der BMC und die CPU starten.

## Revendications

1. Système de gestion de démarrage de serveur, comprenant : une unité de microcontrôleur (MCU) (110), un module de stockage (120), un contrôleur de gestion de la carte mère (BMC) (130) et une unité centrale de traitement (CPU) (140) ;
la MCU est configurée pour contrôler la mise en marche et l'arrêt du BMC et de la CPU, et la MCU vérifie au moins l'un parmi le BMC et la CPU, lit les données de micrologiciel dans le module de stockage, et obtient un résultat de vérification de sécurité ou un résultat de vérification de vulnérabilité ;
le module de stockage est configuré pour stocker des données de micrologiciel du BMC et des données de micrologiciel de la CPU ; et
au moins l'un parmi le BMC et la CPU est configuré pour démarrer en fonction du résultat de vérification de sécurité fourni par la MCU, ou pour empêcher le démarrage en fonction du résultat de vérification de vulnérabilité fourni par la MCU ;
dans lequel la MCU est en outre configurée pour : après la mise sous tension d'un serveur, bloquer les broches de réinitialisation du BMC et de la CPU à l'aide de signaux de réinitialisation, et empêcher le BMC et la CPU de démarrer ; obtenir le résultat de vérification de sécurité une fois que la vérification ou la mise à jour du micrologiciel du BMC et de la CPU a abouti ; et libérer les broches de réinitialisation du BMC et de la CPU en fonction du résultat de vérification de sécurité, de telle sorte que le BMC et la CPU démarrent.

2. Système de gestion de démarrage de serveur selon la revendication 1, dans lequel le module de stockage comprend un premier micrologiciel de stockage et un second micrologiciel de stockage ; et
le premier micrologiciel de stockage est configuré pour stocker les données de micrologiciel du BMC, et le second micrologiciel de stockage est configuré pour stocker les données de micrologiciel de la CPU.

3. Système de gestion de démarrage de serveur selon la revendication 2, dans lequel la MCU est configurée pour :
lire les données de micrologiciel du premier micrologiciel de stockage et les données de micrologiciel du second micrologiciel de stockage ;
déterminer qu'un résultat de vérification correspondant au premier micrologiciel de stockage est le résultat de vérification de sécurité, et déterminer que le premier micrologiciel de stockage est un micrologiciel sécurisé, ou déterminer qu'un résultat de vérification correspondant au second micrologiciel de stockage est le résultat de vérification de sécurité, et déterminer que le second micrologiciel de stockage est un micrologiciel sécurisé ; déterminer que le résultat de vérification correspondant au second micrologiciel de stockage est le résultat de vérification de vulnérabilité, et déterminer que le second micrologiciel de stockage est un micrologiciel vulnérable, ou déterminer que le résultat de vérification correspondant au premier micrologiciel de stockage est le résultat de vérification de vulnérabilité, et déterminer que le premier micrologiciel de stockage est un micrologiciel vulnérable ; et
synchroniser le micrologiciel sécurisé avec le micrologiciel vulnérable.

4. Système de gestion de démarrage de serveur selon la revendication 2, comprenant en outre un module de déclenchement :
le module de déclenchement est configuré pour contrôler une connexion entre la MCU et le premier micrologiciel de stockage, ou une connexion entre la MCU et le second micrologiciel de stockage ; ou
comprenant en outre un module de déclenchement : le module de déclenchement est configuré pour contrôler une connexion entre la MCU et le premier micrologiciel de stockage, ou une connexion entre la MCU et le second micrologiciel de stockage, dans lequel le module de déclenchement comprend un double port de contrôle ; et le module de déclenchement est configuré pour, à l'aide d'une logique de commutation, permettre à la MCU d'être connectée au premier micrologiciel de stockage et au second micrologiciel de stockage via le double port de contrôle.

5. Système de gestion de démarrage de serveur selon la revendication 2, dans lequel le BMC est connecté au premier micrologiciel de stockage ou au second micrologiciel de stockage via un bus d'interface périphérique série (SPI), et la MCU est connectée au premier micrologiciel de stockage ou au second micrologiciel de stockage via le bus SPI ; ou
dans lequel le BMC commute, à l'aide d'un premier signal de sélection de puce (CS), la connexion entre le BMC et le premier micrologiciel de stockage ou le second micrologiciel de stockage ; et la MCU commute, à l'aide d'un second signal de sélection de puce (CS), une connexion entre la MCU et le premier micrologiciel de stockage, ou une connexion entre la MCU et le second micrologiciel de stockage.

6. Système de gestion de démarrage de serveur selon la revendication 5, dans lequel la MCU est en outre configurée pour :
dans les cas où les résultats de vérification correspondant au premier micrologiciel de stockage et au second micrologiciel de stockage sont tous deux le résultat de vérification de vulnérabilité, déterminer si une option de démarrage de reprise après sinistre est activée ; et
dans les cas où le démarrage de reprise après sinistre n'est pas activé, maintenir le blocage des signaux de réinitialisation sur les broches de réinitialisation du BMC et de la CPU, et enregistrer un journal système et déclencher une alarme sonore.

7. Système de gestion de démarrage de serveur selon la revendication 3, dans lequel la MCU est en outre configurée pour :
dans les cas où le démarrage de reprise après sinistre est activé, effacer le premier micrologiciel de stockage correspondant au BMC et le second micrologiciel de stockage correspondant à la CPU ; et
actualiser le micrologiciel de démarrage d'urgence dans le premier micrologiciel de stockage ou le second micrologiciel de stockage, de telle sorte que le BMC ou la CPU démarre le micrologiciel de démarrage d'urgence.

8. Système de gestion de démarrage de serveur selon la revendication 7, dans lequel la MCU ou la CPU est en outre configurée pour :
une fois le micrologiciel de démarrage d'urgence démarré, télécharger un nouveau micrologiciel BMC ou un nouveau micrologiciel CPU à partir d'une adresse cible, de telle sorte que la MCU détermine la sécurité du micrologiciel BMC ou du micrologiciel CPU ; et
une fois qu'il a déterminé que le micrologiciel BMC ou le micrologiciel CPU est sécurisé, actualiser le premier micrologiciel de stockage ou le second micrologiciel de stockage, obtenir une notification d'achèvement de la mise à jour et l'envoyer à la MCU.

9. Système de gestion de démarrage de serveur selon la revendication 8, dans lequel la MCU reçoit la notification d'achèvement de la mise à jour du BMC ou de la CPU via un bus de circuit inter-intégré (I2C) .

10. Système de gestion de démarrage de serveur selon la revendication 1, dans lequel la MCU est configurée pour : à l'aide d'un algorithme de chiffrement et de déchiffrement défini et d'une clé de sécurité non modifiable stockée dans une zone de clés, effectuer des calculs de chiffrement et de déchiffrement sur les données de micrologiciel du module de stockage afin d'obtenir une valeur de contrôle de sécurité, et comparer la valeur de contrôle de sécurité calculée à une valeur de contrôle de sécurité stockée dans le module de stockage afin d'obtenir un résultat de correspondance ; dans le cas où la comparaison aboutit, générer le résultat de vérification de sécurité ; et dans le cas où la comparaison échoue, générer le résultat de vérification de vulnérabilité ; ou
dans lequel la MCU est en outre configurée pour : rendre un programme de la MCU non modifiable au moyen d'une clé de sécurité obtenue lors de la gravure du micrologiciel ; et détruire tout micrologiciel malveillant non légitime, effectuer un démarrage d'urgence du serveur à l'aide d'un démarrage de reprise après sinistre, et effectuer une restauration automatique du micrologiciel sécurisé légitime à partir du micrologiciel d'urgence.

11. Système de gestion de démarrage de serveur selon la revendication 1, dans lequel la MCU est en outre configurée pour : effectuer une première vérification de l'intégrité et de la légitimité du BMC ; dans le cas où la première vérification aboutit, émettre un signal de réinitialisation du BMC, de telle sorte que le BMC démarre en toute sécurité ; commander une porte de liaison CPU pour connecter une mémoire flash à la MCU ; et effectuer une seconde vérification de l'intégrité et de la légitimité du micrologiciel du système d'entrée-sortie de base (BIOS), si la seconde vérification échoue, demander au BMC de restaurer le micrologiciel du BIOS, et, si la restauration du micrologiciel du BIOS est terminée, permettre à la CPU de démarrer en toute sécurité.

12. Procédé de gestion du démarrage d'un serveur utilisant le système de gestion du démarrage du serveur selon l'une quelconque des revendications 1 à 11.

13. Procédé de gestion de démarrage de serveur selon la revendication 12, dans lequel le module de stockage comprend un premier micrologiciel de stockage et un second micrologiciel de stockage ; et
le procédé consistant en outre à :
lire les données de micrologiciel du premier micrologiciel de stockage et les données de micrologiciel du second micrologiciel de stockage ;
déterminer qu'un résultat de vérification correspondant au premier micrologiciel de stockage est le résultat de vérification de sécurité, et déterminer que le premier micrologiciel de stockage est un micrologiciel sécurisé, ou déterminer qu'un résultat de vérification correspondant au second micrologiciel de stockage est le résultat de vérification de sécurité, et déterminer que le second micrologiciel de stockage est un micrologiciel sécurisé ; déterminer que le résultat de vérification correspondant au second micrologiciel de stockage est le résultat de vérification de vulnérabilité, et déterminer que le second micrologiciel de stockage est un micrologiciel vulnérable, ou déterminer que le résultat de vérification correspondant au premier micrologiciel de stockage est le résultat de vérification de vulnérabilité, et déterminer que le premier micrologiciel de stockage est un micrologiciel vulnérable ; et
synchroniser le micrologiciel sécurisé avec le micrologiciel vulnérable.

14. Procédé de gestion de démarrage de serveur selon la revendication 13, comprenant en outre :
dans les cas où les résultats de vérification correspondant au premier micrologiciel de stockage et au second micrologiciel de stockage sont tous deux le résultat de vérification de vulnérabilité, déterminer si une option de démarrage de reprise après sinistre est activée ;
dans les cas où le démarrage de reprise après sinistre n'est pas activé, maintenir le blocage des signaux de réinitialisation sur les broches de réinitialisation du BMC et de la CPU, et enregistrer un journal système et déclencher une alarme sonore ;
dans les cas où le démarrage de reprise après sinistre est activé, effacer le premier micrologiciel de stockage correspondant au BMC et le second micrologiciel de stockage correspondant à la CPU ; et actualiser le micrologiciel de démarrage d'urgence dans le premier micrologiciel de stockage ou le second micrologiciel de stockage, de telle sorte que le BMC ou la CPU démarre le micrologiciel de démarrage d'urgence.

15. Procédé de gestion de démarrage de serveur selon la revendication 12, dans lequel, avant que la MCU ne vérifie au moins l'un parmi le BMC et la CPU, le procédé comprend en outre :
après la mise sous tension d'un serveur, le blocage des broches de réinitialisation du BMC et de la CPU à l'aide des signaux de réinitialisation, et l'empêchement du démarrage du BMC et de la CPU ; ou
dans lequel la MCU contrôlant le démarrage d'au moins l'un parmi le BMC et la CPU en fonction du résultat de vérification de sécurité comprend : l'obtention du résultat de vérification de sécurité après que la vérification ou la mise à jour du micrologiciel du BMC et de la CPU a abouti ; et la libération des broches de réinitialisation du BMC et de la CPU en fonction du résultat de vérification de sécurité, de telle sorte que le BMC et la CPU démarrent.
